# EUROPÄISCHE PATENTSCHRIFT

(11) **EP 2 915 710 B1**
(45) Veröffentlichungstag und Bekanntmachung des Hinweises auf die Patenterteilung: **20.09.2017**
(21) Anmeldenummer: 15000905.8
(22) Anmeldetag: 16.11.2010
(51) Int. Cl.: B60T 8/88, B60T 17/22, B60T 8/36, B60T 8/48

(54) **Betriebsbremseinrichtung eines Fahrzeugs mit Testlauf für Ventile**
OPERATING BRAKE DEVICE OF A VEHICLE HAVING TEST RUN FOR VALVES
DISPOSITIF DE FREINAGE DE SERVICE D'UN VÉHICULE AVEC CYCLE D'ESSAI POUR SOUPAPES

(30) Priorität: 18.11.2009 DE 102009053815
(43) Veröffentlichungstag der Anmeldung: 09.09.2015
(62) Teilanmeldung aus: 10779790.4
(73) Patentinhaber: KNORR-BREMSE Systeme für Nutzfahrzeuge GmbH, 80809 München (DE)
(72) Erfinder: Wieder, Gerhard, D-74354 Besigheim (DE); Mustapha, Adnan, D-75433 Maulbronn (DE); Ziegler, Andreas, D-71287 Weissach (DE); Schwab, Frank, D-75249 Kieselbronn (DE); Jundt, Oliver, D-74394 Hessigheim (DE); Holobrádi, Péter, 2040 Budaörs (HU)

(56) Entgegenhaltungen:
- EP-A1- 0 477 519
- EP-A2- 0 485 367
- EP-A2- 0 604 864
- EP-A2- 0 933 275
- DE-A1- 19 639 005
- DE-A1-102006 014 269
- US-A- 3 948 568

## Beschreibung

Die Erfindung geht aus von einer Betriebsbremseinrichtung eines Fahrzeugs gemäß dem Oberbegriff von Anspruch 1.

Eine Betriebsbremseinrichtung eines Fahrzeugs mit wenigstens einem von einem elektronischen Steuergerät zum schlupfgeregelten Bremsen gesteuerten, wenigstens ein Einlassventil und ein Auslassventil aufweisenden und einem druckmittelbetätigten Bremszylinder vorgeordneten ABS-Drucksteuerventil ist beispielsweise aus der DE 101 55 952 A1 bekannt. Bei solchen Betriebsbremseinrichtungen ergibt sich das Problem, dass zuverlässig überprüft werden sollte, ob die ABS-Drucksteuerventile ordnungsgemäß funktionieren.

In der US-A-3 948 568 wird eine Anordnung zur Selbstüberprüfung eines Bremskreises mit ABS beschrieben, bei dem die Wirksamkeit der Pumpe, die Dichtigkeit der Ventile und deren rechtzeitiges Ansprechen überprüft werden. Dies geschieht dadurch, dass für jedes ABS-Drucksteuerventil in einer Druckleitung zwischen dem ABS-Drucksteuerventil und den zugeordneten Radbremszylindern jeweils ein Drucksensor angeordnet und der von diesem Drucksensor detektierte Druck im Rahmen eines Testlauf gemessen und mit vorgegebenen Schwellwerten verglichen wird. In ähnlicher Weise wird gemäß DE 10 2006 014 269 A1 eine hydraulische Bremseinrichtung eines Fahrzeugs beschrieben, bei der in einer Druckleitung zwischen einem ABS-Drucksteuerventil und einem Radbremszylinder ein Drucksensor angeordnet ist, wobei im Rahmen eines Tests der von diesem Drucksensor detektierte Druck im Rahmen eines Testlauf gemessen und mit erwarteten Werten verglichen wird. Nachteilig hierbei ist jedoch, dass für jedes ABS-Drucksteuerventil ein eigener Drucksensor vorgesehen werden muss.

Gemäß einer weiteren Ausführungsform der US-A-3 948 568 wird in einer Druckleitung zwischen einem den ABS-Drucksteuerventilen vorgeordneten Ventil und den ABS-Druckssteuerventilen ein Drucksensor angeordnet der von diesem Drucksensor detektierte Druck im Rahmen eines Testlauf gemessen und mit vorgegebenen Schwellwerten verglichen. Nachteilig hierbei ist jedoch, dass Fehler, die aus Abweichungen des gemessen Drucks von einem erwarteten Druckwert geschlossen werden, nicht eindeutig dem vorgeordneten Ventil oder den ABS-Druckssteuerventilen zugeordnet werden können.

Gemäß DE 196 39 005 A1 wird ein Verfahren zur Überprüfung einer hydraulischen Bremsanlage vorgeschlagen, bei dem im Rahmen eines automatischen Prüfprogramms ABS-Ventile zum Druckaufbau, Druckhalten und Druckabbau betätigt werden und an einem Rad des Fahrzeugs jeweils das Bremsmoment bzw. die Radverzögerung gemessen wird.

Bei einer gattungsgemäßen Betriebsbremseinrichtung gemäß EP 0 933 275 A2 werden im Rahmen einer Variante eines Verfahrens zur Überprüfung der Bremseinrichtung das Einlassventil und das Auslassventil eines ABS-Drucksteuerventils in Sperrstellung gebracht und ein vorgeordnetes Ventil in Durchlassstellung, um die Druckmittelleitung zwischen dem vorgeordneten Ventil und den ABS-Drucksteuerventilen unter Druck zu setzen. Bei Geradeausfahrt des Fahrzeugs und bei konstanter Fahrgeschwindigkeit werden dann Raddrehzahlgrößen und Radschlupfgrößen ermittelt und mit Schwellwerten verglichen. Wird dabei festgestellt, dass eine der Radschlupfgrößen größer als der Schwellwert ist, wird auf ein defekt offenes Einlassventil der ABS-Drucksteuerventile geschlossen. Gemäß einer weiteren Variante des Verfahrens wird für jeweils ein Rad nacheinander das Einlassventil in seine Durchlassstellung gebracht, während die Einlassventile der restlichen Räder in ihrer Sperrstellung sind. Zugleich wird das vorgeordnete Ventil geöffnet. Dann wird überprüft, ob sich ein signifikanter Drehzahlunterschied des gebremsten Fahrzeugrads zu den ungebremsten Fahrzeugrädern ergibt. Dadurch können zwar die Funktionen der Einlass- bzw. Auslassventile überprüft werden, nicht jedoch, ob das Einlassventil bzw. das Auslassventil des ABS-Drucksteuerventils an das elektronische Steuergerät vertauscht angeschlossen sind:

Der vorliegenden Erfindung liegt demgegenüber die Aufgabe zugrunde, eine Betriebsbremseinrichtung der oben erwähnten Art derart weiter zu entwickeln, dass weitere Fehler in ABS-Drucksteuerventilen auf einfache Weise detektierbar sind.

Diese Aufgabe wird erfindungsgemäß durch die Merkmale von Anspruch 1 gelöst.

### Offenbarung der Erfindung

Der Stand der Technik setzt teilweise das Vorhandensein eines Drucksensors in einer zwischen der Ventileinrichtung und dem ABS-Steuerdruckventil verlaufenden Druckmittelleitung voraus.

Falls auf einen solchen Drucksensor verzichtet werden soll, so können die bei ABS-/ASR-Systemen üblichen Raddrehzahlsensoren zur Messung der Raddrehzahlen und/oder ein Beschleunigungssensor zur Messung der Längsbeschleunigung des Fahrzeugs dazu herangezogen werden, um relevante Messwerte zu liefern, aus welchen sich Rückschlüsse auf die Funktionstüchtigkeit der Ventile von Betriebsbremseinrichtungen ziehen lassen.

Die Erfindung geht davon aus, dass das elektronische Steuergerät ausgebildet, ist, dass es im Rahmen wenigstens eines Testlaufs das Einlassventil und das Auslassventil des ABS-Drucksteuerventils und die Ventileinrichtung steuert, um in der Druckmittelleitung einen Druck zu erzeugen, und dass der Wert des dann vorliegenden Radschlupfes mittels des Raddrehzahlsensors und/oder der Wert der dann vorliegenden Fahrzeugbeschleunigung oder -verzögerung mittels des Beschleunigungssensors erfasst und mit gespeicherten Werten verglichen wird, und bei einer nach vorbestimmten Kriterien vorliegenden Abweichung der erfassten Werte von erwarteten Werten ein Fehlersignal erzeugt wird.

Das elektronische Steuergerät ist dann ausgebildet, dass es im Rahmen eines Testlaufs bei vorzugsweise konstanter und geringer Geschwindigkeit des Fahrzeugs das Einlassventil und das Auslassventil des ABS-Drucksteuerventils in Sperrstellung steuert und dann die Ventileinrichtung steuert, um den vom Druckmittelvorrat abgeleiteten Druck in die Druckmittelleitung einzusteuern. Bei intaktem, d.h. korrekt schließendem Einlassventil des ABS-Drucksteuerventils wird nur die Druckmittelleitung zwischen der Ventileinrichtung und dem ABS-Drucksteuerventil befüllt, wohingegen kein Druck aus der Druckmittelleitung in den Bremszylinder eingesteuert wird. Somit verbleibt der Bremszylinder in Lösestellung, so dass auch kein Radschlupf durch den Raddrehzahlsensor bzw. auch keine Verzögerung durch den Beschleunigungssensor festgestellt werden kann. Die gemessenen Werte und die im Steuergerät gespeicherten Vergleichswerte für die Beschleunigung und den Radschlupf sind daher gleich Null.

Bei defektem, d.h. nicht korrekt schließendem Einlassventil wird hingegen Druck aus der Druckmittelleitung in den Bremszylinder eingesteuert, was eine gewisse Bremswirkung und damit eine gewisse Fahrzeugverzögerung und einen gewissen Bremsschlupf hervorruft. Diese dann vom Beschleunigungssensor bzw. vom Raddrehzahlsensor in Verbindung mit dem elektronischen Steuergerät detektierten Werte werden dann mit den erwarteten, den Wert gleich Null aufweisenden Referenzwerten im Speicher des elektronischen Steuergeräts verglichen. Die hier vorliegende Abweichung der gemessenen von den gespeicherten Werten deutet dann auf ein fehlerhaftes Einlassventil hin, worauf vom elektronischen Steuergerät ein entsprechendes Fehlersignal erzeugt wird.

Mit den vorstehend beschriebenen Maßnahmen kann daher die Funktionstüchtigkeit eines Einlassventils eines ABS-Drucksteuerventils überprüft werden.

Erfindungsgemäß ist das elektronische Steuergerät weiterhin ausgebildet, dass es bei einem vom Druckmittelvorrat abgeleiteten, in der Druckmittelleitung anstehenden Druck das Einlassventil und das Auslassventil des ABS-Drucksteuerventils in Öffnungsstellung steuert. Bei intaktem, d.h. vollständig öffnendem Auslassventil wird Druckmittel aus der Druckmittelleitung über das Auslassventil abgelassen. Somit sind eine nur geringe Bremswirkung und damit ein geringer Bremsschlupf mittels des Raddrehzahlsensors bzw. mittels des Beschleunigungssensors messbar. Ein Vergleich mit gespeicherten Referenzwerten brächte daher keine nennenswerten Abweichungen hervor. Falls hingegen das Auslassventil des ABS-Drucksteuerventils defekt ist, z.B. weil es nicht vollständig oder korrekt öffnet, so wird ein höherer Druck an den Bremszylinder durchgesteuert, was eine größere als eine erwartete Bremswirkung zur Folge hat. Dies kann durch den betreffenden Raddrehzahlsensor bzw. den Beschleunigungssensor detektiert und ein Fehlersignal erzeugt werden.

Das Fehlersignal kann optisch, beispielsweise durch eine Warnleuchte im Fahrerhaus des Fahrzeugs und/oder akustisch angezeigt werden. Denkbar ist aber auch eine Eintragung in einem auslesbaren Fehlerspeicher des elektronischen Steuergeräts.

Genaueres geht aus der folgenden Beschreibung von Ausführungsbeispielen hervor.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: einen schematischen Aufbauplan einer Betriebsbremseinrichtung eines Nutzfahrzeugs gemäß einer bevorzugten Ausführungsform der Erfindung;
- Fig.2: einen gemessenen Druckverlauf sowie einen Referenzdruckverlauf über der Zeit.

### Beschreibung der Ausführungsbeispiele

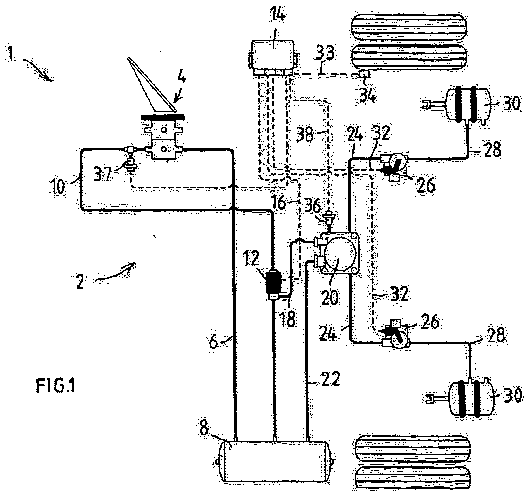

In Fig.1 ist eine bevorzugte Ausführungsform einer elektro-pneumatische Betriebsbremseinrichtung 1 eines Nutzfahrzeugs dargestellt. Die Betriebsbremseinrichtung 1 hat zwei Bremskreise, einen Bremskreis für die Vorderachse und einen Bremskreis für die angetriebene Hinterachse, wobei aus Übersichtlichkeitsgründen hier lediglich der Bremskreis 2 für die Hinterachse beschrieben wird. Die Betriebsbremseinrichtung 1 verfügt über ein bremsschlupfgeregeltes Antiblockiersystem (ABS) sowie vorzugsweise auch über eine Antriebsschlupfregelung (ASR).

Ausgehend von einem fahrerfußbetätigten Betriebsbremsventil 4, dessen pneumatischer Hinterachsbremskreis 2 durch eine Vorratsleitung 6 von einem Hinterachsvorrat 8 mit Druckluft versorgt wird, erstreckt sich eine Steuerdruckleitung 10 bis an einen Steuereingang eines ASR-Ventils 12, welches bevorzugt durch ein einerseits durch den vom Betriebsbremsventil 4 ausgesteuerten Steuerdruck in der Steuerdruckleitung 10 und andererseits durch in einer von einem elektronischen Steuergerät 14 heran geführten elektrischen Steuerleitung 16 geleitete elektrische Signale gesteuertes 3/2-Wege-Ventil gebildet wird. An seinem Arbeitsausgang ist das ASR-Ventil 12 durch eine Druckmittelleitung 18 mit einem Steuereingang eines Relaisventils 20 verbunden, dessen Vorratsanschluss mittels einer Vorratsleitung 22 ebenfalls an den Hinterachsvorrat 8 angeschlossen ist. Die beiden Arbeitsausgänge des Relaisventils 20 stehen mit je einer Druckmittelleitung 24 in Verbindung, welche in jeweils ein ABS-Drucksteuerventil 26 mündet.

Solche ABS-Drucksteuerventile 26 sind hinreichend bekannt, beispielsweise aus der EP 0 304 610 B1. Sie beinhalten jeweils ein Einlassventil und ein Auslassventil. Die ABS-Drucksteuerventile 26 sind über pneumatische Verbindungsleitungen 28 jeweils mit einem druckluftbetätigten aktiven Betriebsbremszylinder 30 verbunden.

Durch die ABS-Drucksteuerventile 26 werden schlupfgeregelte Bremsungen im Rahmen des ABS realisiert, indem sie vom elektronischen Steuergerät 14 mittels Signalleitungen 32 in Abhängigkeit der von der jeweils vorliegenden, von je einem Raddrehzahlsensor 34 gemessenen Raddrehzahl und dem daraus berechneten Bremsschlupf zum Druckhalten, Drucksteigern oder Drucksenken angesteuert werden. Die Raddrehzahlsensoren sind hierzu mittels Signalleitungen 33 mit dem elektronischen Steuergerät 14 verbunden.

Der Übersichtlichkeit halber sind in Fig.1 lediglich für die Hinterachsseite die oben beschriebenen Elemente dargestellt. Das Prinzip dieser Ausführung kann ebenso an der Vorderachse angewendet werden. Dementsprechend muss es sich bei dem Ventil 12 nicht um ein ASR-Ventil handeln. Vielmehr kann das Ventil 12 ein beliebiges Schaltventil insbesondere auch für die Vorderachse darstellen im Rahmen von ESP, ACC (Adaptive Cruise Control) etc.

Zum Drucksenken im jeweiligen Betriebsbremszylinder 30 wird beispielsweise das Auslassventil des zugeordneten ABS-Drucksteuerventils 26 bei geschlossenem Einlassventil geöffnet, zum Drucksteigern wird das Einlassventil geöffnet und das Auslassventil geschlossen, zum Druckhalten wird der Druck im Betriebsbremszylinder 30 durch das geschlossene Einlassventil und das geschlossene Auslassventil gehalten. "Geschlossen" bedeutet dabei, dass das jeweilige Ventil in Sperrstellung geschaltet ist, wohingegen "geöffnet" heißt, dass das betreffende Ventil in Durchgangsstellung geschaltet ist. Je nachdem ob die Einlass- bzw. Auslassventile stromlos bzw. bestromt geöffnet oder geschlossen werden sollen, erfolgt daher eine entsprechende Ansteuerung durch das elektronische Steuergerät 14.

Das ASR-Ventil 12 schaltet, falls es über die pneumatische Steuerleitung 10 durch eine Betätigung des Betriebsbremsventils 4 an seinem pneumatischen Steuereingang mit Steuerdruckluft beaufschlagt wird, diesen Steuerdruck auf den pneumatischen Steuereingang des Relaisventils 20, woraufhin dieses einen aus dem Vorratsdruck des Hinterachsvorrats 8 einen Bremsdruck moduliert. Dieser Bremsdruck wird dann in die jeweilige, dem Relaisventil 20 und dem ABS-Drucksteuerventil 26 zwischengeordnete Druckmittelleitung 24 eingesteuert. Der in dieser Druckmittelleitung 24 herrschende Druck wird von einem Drucksensor 36 gemessen und an das elektronische Steuergerät 14 mittels einer Signalleitung 38 rückgemeldet. Aus Übersichtlichkeitsgründen ist in Fig.1 lediglich ein Drucksensor 36 in der dem rechten Hinterrad zugeordneten Druckmittelleitung 24 angeordnet. Selbstverständlich kann auch ein solcher Drucksensor auch in der dem linken Hinterrad zugeordneten Druckmittelleitung angeordnet sein.

Falls keine Bremsschlupfregelung notwendig ist, wird der Bremsdruck in die Betriebsbremszylinder 30 der Hinterachse unverändert eingesteuert. Bei Auftreten von unzulässigem Bremsschlupf, welcher von dem jeweiligen Raddrehzahlsensor 34 detektiert werden kann, wird der Druck im Betriebsbremszylinder 30 durch Öffnen des Auslassventils des zugeordneten ABS-Drucksteuerventils 26 kurzzeitig gesenkt und danach wieder erhöht bzw. gehalten.

Bei unzulässigem Antriebsschlupf, welcher ebenfalls durch die über die elektrischen Signalleitungen 33 an das elektronische Steuergerät 14 gemeldeten Raddrehzahlen festgestellt werden kann, erfolgt die Ansteuerung des ASR-Ventils 12 über die elektrische Steuerleitung 16 durch das elektronische Steuergerät 14 ohne Zutun des Fahrers automatisch. Dann schaltet das ASR-Ventil 12 einen vom Vorratsdruck des Hinterachsvorrats 8 abgeleiteten Druck auf den pneumatischen Steuereingang des Relaisventils 20, welches daraufhin einen von diesem Druck angeleiteten Bremsdruck in die Druckmittelleitungen 24 zwischen Relaisventil 20 und ABS-Drucksteuerventil 26 einsteuert, um die antriebsschlupfenden Räder auf einen zulässigen Antriebsschlupf einzubremsen.

Das Relaisventil 20 ist nicht notwendigerweise vorhanden, so dass sich die den Drucksensor 36 aufweisende Druckmittelleitung 24 auch direkt zwischen dem ASR-Ventil 12 und dem ABS-Drucksteuerventil erstrecken kann.

Das elektronische Steuergerät 14, vorzugsweise ein kombiniertes ABS-/ASR-Bremssteuergerät ist ausgebildet, dass es im Rahmen wenigstens eines Testlaufs das Einlassventil und/oder das Auslassventil der ABS-Drucksteuerventile 26 und/oder das ASR-Ventil 12 steuert, um in der hier dem rechten Hinterrad zugeordneten Druckmittelleitung 24 einen von dem Drucksensor 36 erfassbaren Druck zu erzeugen.

Ein solcher Testlauf kann beispielsweise bei oder nach jedem Fahrzeugstart oder bei Fahrzeugstillstand in regelmäßigen oder unregelmäßigen Zeitabständen durchgeführt werden.

Durch Auswertung der von dem Drucksensor 36 gelieferten Signale durch das elektronische Steuergerät 14 wird dann der zeitliche Druckverlauf des in die Druckmittelleitung 24 eingesteuerten Drucks erfasst und mit einem erwarteten, in einem Speicher des elektronischen Steuergeräts 14 gespeicherten Druckverlauf verglichen. Bei einer nach vorbestimmten Kriterien vorliegenden Abweichung des erfassten Druckverlaufs von dem erwarteten gespeicherten Druckverlauf wird dann ein Fehlersignal erzeugt, welches auf einen Defekt oder Fehler in einem oder in mehreren Ventile hinweist.

Besonders bevorzugt ist das elektronische Steuergerät 14 ausgebildet, dass es im Rahmen eines ersten Testlaufs das Einlassventil und das Auslassventil des ABS-Drucksteuerventils 26 in Sperrstellung steuert und dann das ASR-Ventil 12 steuert, um den vom Hinterachsvorrat 8 abgeleiteten Druck in die Druckmittelleitung 24 einzusteuern. Demnach wird die Druckmittelleitung 24 durch das ASR-Ventil 12 druckbeaufschlagt, wobei das Volumen der Druckmittelleitung 24 durch die geschlossenen Einlass- und Auslassventile des ABS-Drucksteuerventils 26 zu dem Betriebsbremszylinder 30 hin abgeschlossen ist.

Bei intaktem Einlassventil des ABS-Drucksteuerventils 26 ergibt sich dann ein schneller Anstieg des Druckverlaufs über der Zeit, weil lediglich das relativ kleine Volumen der Druckmittelleitung 24 druckbeaufschlagt wird. Dieser Druckverlauf wird von dem Drucksensor 36 in der Druckmittelleitung 24 aufgenommen.

Ist das Einlassventil dagegen defekt, weil es beispielsweise nicht vollständig schließt, so ergibt sich ein langsamerer Anstieg des Druckverlaufs über der Zeit, da dann zusätzlich das Leitungsvolumen der das ABS-Drucksteuerventil 26 mit dem Betriebsbremszylinder 30 verbindenden Verbindungsleitung sowie eine Arbeitskammer des Betriebsbremszylinders mit Druckmittel befüllt wird. Durch einen Vergleich eines gespeicherten zeitlichen Referenz-Druckmittelverlaufs mit dem tatsächlichen gemessenen Druckmittelverlauf beispielsweise anhand des jeweiligen Druckgradienten ist daher beim Einlassventil oder beim Auslassventil des ABS-Drucksteuerventils 26 oder beim ASR-Ventil 12 eine Fehlerdetektion möglich.

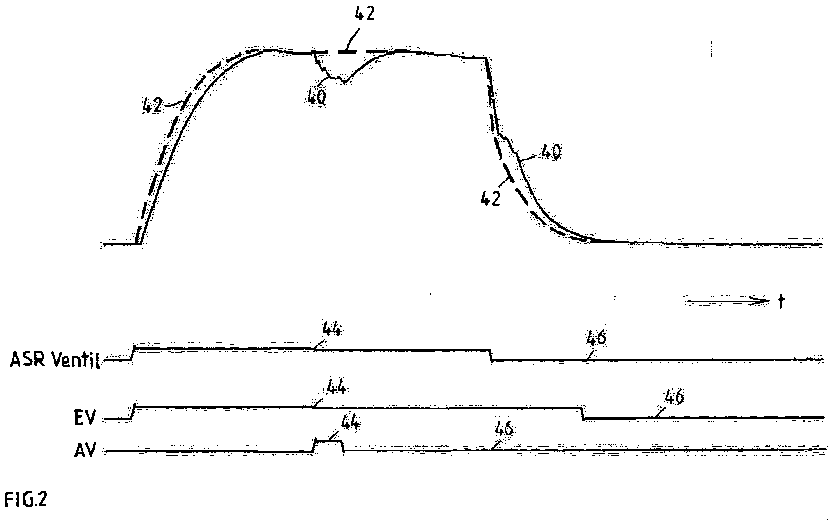

In Fig.2 ist ein gemessener Druckverlauf (durchgezogene Linie) 40 einem gespeicherten zeitlichen Referenzdruckverlauf (gestrichelte Linie) 42 über der Zeit t gegenübergestellt. Darunter ist ein Bestromen 44 des betreffenden Ventils (ASR-Ventil 12, Einlassventil EV, Auslassventil AV) durch das Steuergerät 14 durch eine Erhebung und ein Entstromen 46 des betreffenden Ventils durch eine Senke 46 zeichnerisch gekennzeichnet.

Dabei wird zunächst das ASR-Ventil 12 durch Bestromen 44 angesteuert, um einen von dem Hinterachsvorrat 8 abgeleiteten Druck über das Relaisventil 20 in die Druckmittelleitung 24 einzüsteuern. Gleichzeitig wird das Einlassventil des ABS-Drucksteuerventils 26 bestromt, um es in Sperrstellung zu schalten. Dann müsste sich nach einiger Zeit bei korrekt schließendem Einlassventil ein konstanter Druck in der Druckmittelleitung 24 aufbauen wie der Referenz-Druckverlauf 42 zeigt. Wenn dann zusätzlich das Auslassventil bestromt wird, um es kurzzeitig zu öffnen bleibt der (dann abgesperrte) Druck konstant. Ist das Einlassventil dagegen defekt, weil es beispielsweise nicht vollständig schließt, so ergibt sich ein Druckabfall (siehe Knick im Druckverlauf 40 in Fig.2) in der Druckmittelleitung 24 solange das Auslassventil angesteuert wird.

Gemäß einer weiteren Ausführungsform des Verfahrens kann das elektronische Steuergerät 14 ausgebildet sein, dass es bei Steuerung des Einlassventils in Schließstellung und bei Einsteuern von Druck in die Druckmittelleitung 24 durch das ASR-Ventil 12 das Auslassventil des ABS-Drucksteuerventils 26 in Öffnungsstellung steuert. Dann wird im Falle eines nicht vollständig schließenden Einlassventils das in die Druckmittelleitung 24 eingesteuerte Druckmittel teilweise in die Atmosphäre abgelassen, wobei sich ein gegenüber einem gespeicherten Referenzdruckverlauf messbar verzögerter Druckaufbau in der Druckmittelleitung 24 ergibt, welcher von dem Drucksensor 36 messbar ist. Außerdem ist die Entlüftung durch das Auslassventil deutlich hörbar, so dass das diesbezügliche Entlüftungsgeräusch auf ein defektes Einlassventil eines ABS-Drucksteuerventils 26 hinweist.

Darüber hinaus kann das elektronische Steuergerät 14 ausgebildet sein, dass es bei Steuerung des Auslassventils in Öffnungsstellung zusätzlich das Einlassventil des ABS-Drucksteuerventils 26 in Öffnungsstellung steuert. Dann wird der über das ASR-Ventil 12 und das Relaisventil 20 in die Druckmittelleitung 24 eingesteuerte Druck durch das geöffnete Einlassventil des ABS-Drucksteuerventils 26 in den Betriebsbremszylinder 30 eingelassen. Dabei kann ein defektes, weil nicht vollständig öffnendes Auslassventil den Druck im Betriebsbremszylinder 30 nicht kurzzeitig senken, was auf einen Fehler des Auslassventils hindeutet.

Wenn bei gemeinsamem Ansteuern des ASR-Ventils 12 und Öffnen des Auslassventils und bei gleichzeitig geöffnetem Einlassventil der Druckverlauf überwacht wird, kann bei einem fehlerhaften, d.h. bei einem nicht vollständig öffnenden Auslassventil des ABS-Drucksteuerventils 26 ein schnellerer Druckaufbau festgestellt werden als bei einem intakten Auslassventil.

Besonders bevorzugt ist das elektronische Steuergerät 14 ausgebildet, dass es das ASR-Ventil 12 steuert, dass dieses einen vom Hinterachsvorrat 8 abgeleiteten Druck über das Relaisventil 12 in die Druckmittelleitung 24 für einen vorbestimmten Zeitraum einsteuert, insbesondere für einen sehr kurzen Zeitraum, beispielsweise für 200 ms. Ein solcher Druckimpuls kann vom Drucksensor 36 in der Druckmittelleitung 24 erfasst werden, insbesondere hinsichtlich der maximalen Druckhöhe und des Druckabfalls nach dem Impuls als charakteristische Kenngrößen. Abweichungen von diesen Kenngrößen deuten dann auf Ventilfehler hin.

Nicht zuletzt kann das elektronische Steuergerät 14 ausgebildet sein, dass es im Rahmen eines zweiten Testlaufs das Einlassventil und das Auslassventil des ABS-Drucksteuerventils 26 zunächst in Sperrstellung steuert und nach einer Betätigung des Betriebsbremsventils 4 durch den Fahrer das ASR-Ventil 12 in eine Durchlassstellung gesteuert wird, bis der vom Drucksensor 36 in der dem Relaisventil 20 und dem ABS-Drucksteuerventil 26 zwischengeordneten Druckmittelleitung 24 erfasste Druck konstant ist. Dann wird das Auslassventil des ABS-Drucksteuerventils 26 in Öffnungsstellung geschaltet, wodurch der Betriebsbremszylinder 30 druckentlastet wird. Falls das Einlassventil des ABS-Drucksteuerventils 26 einen Defekt aufweist, dann strömt Druckmittel aus der Druckmittelleitung 24 in den Betriebsbremszylinder nach, wodurch ein Druckabfall in der Druckmittelleitung 24 durch den Drucksensor 36 detektierbar ist.

Anstatt eines ASR-Ventils 12 auch ein Druckregelmodul vorgesehen sein, beispielsweise ein 1-Kanal-Druckregelmodul, zur Erzeugung eines geregelten Bremsdrucks in dem wenigstens einen Betriebsbremszylinder 30, wobei in diesem Fall der Drucksensor 36, welcher den Druck in der sich dann zwischen dem Druckregelmodul und dem ABS-Drucksteuerventil 26 erstreckenden Druckmittelleitung 24 misst, bereits in dem Druckregelmodul integriert ist. Weiterhin ist auch das Relaisventil 20 bereits in dem Druckregelmodul integriert, welches dann auch die ASR-Funktionen ausführt.

Nicht zuletzt kann anstatt eines ASR-Ventils 12 auch ein Proportionalventil verbaut sein, solange dieses von einem elektronischen Steuergerät 14 angesteuert werden kann, um Druckluft in die Druckmittelleitung 24 einzusteuern oder eine solche Einsteuerung zu unterbinden.

Die vorangehend beschriebenen Ausführungen setzen das Vorhandensein eines Drucksensors 36 in der zwischen dem ASR-Ventil 12 und dem ABS-Steuerdruckventil 26 verlaufenden Druckmittelleitung 24 voraus. Auf einen solchen Drucksensor 36 kann verzichtet werden, wenn wie bei ABS-/ASR-Systemen üblich, Raddrehzahlsensoren 34 zur Messung der Raddrehzahlen und/oder wenigstens ein Beschleunigungssensor zur Messung der Längsbeschleunigung des Fahrzeugs vorhanden sind.

Dann kann das elektronische Steuergerät 14 ausgebildet sein, dass es im Rahmen wenigstens eines Testlaufs das Einlassventil und/oder das Auslassventil des ABS-Drucksteuerventils 26 und/oder das ASR-Ventil 12 steuert, um in der Druckmittelleitung 24 einen Druck zu erzeugen, und dass der Wert des dann vorliegenden Radschlupfs mittels des betreffenden Raddrehzahlsensors 34 und/oder der Wert der dann vorliegenden Fahrzeugbeschleunigung oder -verzögerung mittels des Beschleunigungssensors erfasst und mit gespeicherten Werten verglichen wird, und bei einer nach vorbestimmten Kriterien vorliegenden Abweichung der erfassten Werte von erwarteten Werten ein Fehlersignal erzeugt wird.

Besonders bevorzugt ist dann das elektronische Steuergerät 14 ausgebildet, dass es im Rahmen eines Testlaufs bei vorzugsweise konstanter und geringer Geschwindigkeit des Fahrzeugs das Einlassventil und das Auslassventil des ABS-Drucksteuerventils 26 in Sperrstellung steuert und dann das ASR-Ventil 12 steuert, um den vom Hinterachsvorrat 8 abgeleiteten Druck in die Druckmittelleitung 24 einzusteuern. Bei intaktem, d.h. korrekt schließendem Einlassventil des ABS-Drucksteuerventils 26 wird die Druckmittelleitung 24 zwischen dem Relaisventil 20 und dem ABS-Drucksteuerventil 26 druckbeaufschlagt, wohingegen kein Druck aus der Druckmittelleitung 24 in den Betriebsbremszylinder 30 eingesteuert wird. Somit verbleibt der Betriebsbremszylinder 30 in Lösestellung, so dass auch kein Radschlupf durch den Raddrehzahlsensor 34 bzw. auch keine Verzögerung durch den Beschleunigungssensor festgestellt werden kann. Die gemessenen Werte und die im Steuergerät 14 gespeicherten Vergleichswerte für die Beschleunigung und den Radschlupf sind daher gleich Null.

Bei defektem, d.h. nicht korrekt schließendem Einlassventil wird hingegen Druck aus der Druckmittelleitung 24 ungewollt in den Betriebsbremszylinder 30 eingesteuert, was eine gewisse Bremswirkung und damit eine gewisse Fahrzeugverzögerung und einen gewissen Bremsschlupf hervorruft. Diese dann vom Beschleunigungssensor bzw. vom Raddrehzahlsensor 34 in Verbindung mit dem elektronischen Steuergerät 14 detektierten Werte werden dann mit den erwarteten, den Wert gleich Null aufweisenden Referenzwerten im Speicher des elektronischen Steuergeräts 14 verglichen. Die hier vorliegende Abweichung der gemessenen von den gespeicherten Werten deutet dann auf ein fehlerhaftes Einlassventil hin, worauf vom elektronischen Steuergerät 14 ein entsprechendes Fehlersignal erzeugt wird.

Mit den vorstehend beschriebenen Maßnahmen kann daher die Funktionstüchtigkeit eines Einlassventils eines ABS-Drucksteuerventils 26 überprüft werden.

Gemäß einer Weiterbildung kann das elektronische Steuergerät 14 ausgebildet sein, dass es bei einem vom Hinterachsvorrat 8 abgeleiteten, in der Druckmittelleitung 24 anstehenden Druck das Einlassventil und das Auslassventil des ABS-Drucksteuerventils 26 in Öffnungsstellung steuert. Bei intaktem, d.h. vollständig öffnendem Auslassventil wird Druckmittel aus der Druckmittelleitung 24 über das Auslassventil abgelassen. Somit ist eine nur geringe Bremswirkung und damit ein geringer Bremsschlupf mittels des Raddrehzahlsensors 34 bzw. mittels des Beschleunigungssensors messbar. Ein Vergleich mit gespeicherten Referenzwerten brächte daher keine nennenswerten Abweichungen hervor. Falls hingegen das Auslassventil des ABS-Drucksteuerventils 26 defekt ist, z.B. weil es nicht vollständig oder korrekt öffnet, so wird ein höherer Druck an den Betriebsbremszylinder 30 durchgesteuert, was eine größere als eine erwartete Bremswirkung zur Folge hat. Dies kann durch den betreffenden Raddrehzahlsensor 34 bzw. den Beschleunigungssensor detektiert und ein Fehlersignal erzeugt werden.

Das Fehlersignal kann optisch, beispielsweise durch eine Warnleuchte im Fahrerhaus des Fahrzeugs und/oder akustisch angezeigt werden. Denkbar ist aber auch eine Eintragung in einem auslesbaren Fehlerspeicher des elektronischen Steuergeräts.

Weiterhin kann auch die Funktion des Drucksensors 36 selbst überprüft werden, insbesondere, ob dieser im gesamten Druckmessbereich korrekt arbeitet. Denn in den meisten Betriebsbremssituationen wird die Betriebsbremse lediglich mit einem Bruchteil des maximal möglichen Bremsdrucks (Vollbremsung) beaufschlagt, so dass ein beispielsweise direkt am Bremszylinder 30 angeordneter Drucksensor im Betrieb dann meist nur Drücke bis zu diesem Bruchteil misst und seine Funktion für höhere Drücke nur selten zum Einsatz kommt und getestet werden kann. Wird der Drucksensor 36 hingegen wie in Fig.1 gezeigt in den Strömungsweg zwischen dem ASR-Ventil 12 und den ABS-Ventilen 26 angeordnet, so kann im Rahmen des Testlaufs das volle Druckspektrum von einem minimalen Bremsdruck bis zu einem maximalen Bremsdruck durchfahren und somit auch die Funktion des Drucksensors 36 im Hinblick auf den gesamten Messbereich überprüft werden.

Hierzu kann ein Vergleich (Gleichlauf) des vom Drucksensor 36 gemessenen Drucks mit dem Steuerdruck herangezogen werden, welcher von einem Drucksensor 37 gemessen wird, der in der vom Betriebsbremsventil 4 zum Ventil 12 gezogene Steuerdruckleitung 10 angeordnet ist.

Nicht zuletzt kann mit Hilfe der Drucksensoren 36, 37 auch die Funktion des Ventils 12 überprüft werden. Denn dieses Ventil 12 kann beispielsweise in seiner Durchlassstellung fehlerhaft hängen bleibt, obwohl es in Sperrstellung gesteuert wurde, weil weder der Fahrer das Betriebsbremsventil 4 betätigt hat, noch eine elektrische Ansteuerung des Ventils 12 erfolgt ist. In diesem Fall zeigt der Drucksensor 37 einen niedrigen Druck, der Drucksensor 37 wegen des in Durchlassstellung verbleibenden Ventils 12 dagegen einen hohen Druck.

### Bezugszeichenliste

- 1: Betriebsbremseinrichtung
- 2: Bremskreis
- 4: Betriebsbremsventil
- 6: Vorratsleitung
- 8: Hinterachsvorrat
- 10: Steuerdruckleitung
- 12: ASR-Ventil
- 14: Steuergerät
- 16: Steuerleitung
- 18: Druckmittelleitung
- 20: Relaisventil
- 22: Vorratsleitung
- 24: Druckmittelleitung
- 26: ABS-Drucksteuerventil
- 28: Verbindungsleitung
- 30: Betriebsbremszylinder
- 32: Signalleitung
- 33: Signalleitung
- 34: Raddrehzahlsensor
- 36: Drucksensor
- 37: Drucksensor
- 38: Signalleitung
- 40: gemessener Druckverlauf
- 42: Referenz-Druckverlauf
- 44: Bestromung
- 46: Entstromen

## Patentansprüche

1. Betriebsbremseinrichtung (1) eines Fahrzeugs mit
a) wenigstens einem von einem elektronischen Steuergerät (14) zum schlupfgeregelten Bremsen gesteuerten, wenigstens ein Einlassventil und ein Auslassventil aufweisenden und einem druckmittelbetätigten Bremszylinder (30) vorgeordneten ABS-Drucksteuerventil (26),
b) einer das ABS-Drucksteuerventil (26) mit Druckmittel versorgenden Druckmittelleitung (24), in welche ein von einer dem ABS-Drucksteuerventil (26) vorgeordneten Ventileinrichtung (12) gesteuerter Druck einsteuerbar ist,
c) wenigstens einem Raddrehzahlsensor (34) und/oder wenigstens einem Beschleunigungssensor zur Messung der Längsbeschleunigung des Fahrzeugs, wobei
d) die Ventileinrichtung (12) einen von einem Vorratsdruck eines Druckmittelvorrats (8) abgeleiteten Druck abhängig von einer Ansteuerung durch das elektronische Steuergerät (14) in die Druckmittelleitung (24) einsteuert,
wobei das elektronische Steuergerät (14) ausgebildet ist, dass es im Rahmen eines Testlaufs
e) das Einlassventil und das Auslassventil des ABS-Drucksteuerventils (26) in Sperrstellung steuert und dann die Ventileinrichtung (12) steuert, um den vom Druckmittelvorrat (8) abgeleiteten Druck in die Druckmittelleitung (24) einzusteuern, und
f) den Wert des dann vorliegenden Radschlupfes mittels des Raddrehzahlsensors (34) und/oder den Wert der dann vorliegenden Fahrzeugbeschleunigung oder -verzögerung mittels des Beschleunigungssensors erfasst und mit gespeicherten Werten vergleicht, und
g) bei einer nach vorbestimmten Kriterien vorliegenden Abweichung der erfassten Werte von erwarteten Werten ein Fehlersignal erzeugt, **dadurch gekennzeichnet, dass**
h) das elektronische Steuergerät (14) weiterhin ausgebildet ist, dass es im Rahmen der Steuerung der Ventileinrichtung, um den vom Druckmittelvorrat (8) abgeleiteten Druck in die Druckmittelleitung (24) einzusteuern, das Einlassventil und das Auslassventil des ABS-Drucksteuerventils (26) in Öffnungsstellung steuert, und
i) den Wert des dann vorliegenden Radschlupfes mittels des Raddrehzahlsensors (34) und/oder den Wert der dann vorliegenden Fahrzeugbeschleunigung oder -verzögerung mittels des Beschleunigungssensors erfasst und mit gespeicherten Werten vergleicht, und
j) bei einer nach vorbestimmten Kriterien vorliegenden Abweichung der erfassten Werte von erwarteten Werten ein Fehlersignal erzeugt.

2. Betriebsbremseinrichtung nach Anspruch 1, **dadurch gekennzeichnet, dass** das Fehlersignal optisch und/oder akustisch angezeigt wird.

3. Betriebsbremseinrichtung nach Anspruch 1, **dadurch gekennzeichnet, dass** das Fehlersignal in einem auslesbaren Speicher des elektronischen Steuergeräts eingetragen wird.

## Claims

1. Service brake device (1) of a vehicle, comprising
a) at least one ABS pressure control valve (26) which is controlled for slip-regulated braking by an electronic control unit (14), has at least one inlet valve and one outlet valve and is arranged upstream of a pressure medium actuated brake cylinder (30),
b) a pressure medium line (24) which supplies the ABS pressure control valve (26) with pressure medium and into which a pressure controlled by a valve device (12) arranged upstream of the ABS pressure control valve (26) is feedable,
c) at least one wheel rotational speed sensor (34) and/or at least one acceleration sensor for measuring the longitudinal acceleration of the vehicle, wherein
d) the valve device (12) feeds a pressure derived from a reservoir pressure of a pressure medium reservoir (8) into the pressure medium line (24) as a function of an activation by the electronic control unit (14),
wherein the electronic control unit (14) is designed such that it
e) directs the inlet valve and the outlet valve of the ABS pressure control valve (26) into the blocking position, and then controls the valve device (12) in order to feed the pressure derived from the pressure medium reservoir (8) into the pressure medium line (24), within the course of a test run, and
f) detects the value of the wheel slip which is then present by means of the wheel rotational speed sensor (34) and/or the value of the vehicle acceleration or deceleration which is then present by means of the acceleration sensor and compares them with stored values, and
g) generates an error signal in the event of a deviation, which is present in accordance with predetermined criteria, of the detected values from expected values,
**characterized in that**
h) the electronic control unit (14) is furthermore designed such that, within the scope of controlling the valve device in order to feed the pressure derived from the pressure medium reservoir (8) into the pressure medium line (24), it directs the inlet valve and the outlet valve of the ABS pressure control valve (26) into the open position, and
i) detects the value of the wheel slip which is then present by means of the wheel rotational speed sensor (34) and/or the value of the vehicle acceleration or deceleration which is then present by means of the acceleration sensor and compares them with stored values, and
j) generates an error signal in the event of a deviation, which is present in accordance with predetermined criteria, of the detected values from expected values.

2. Service brake device according to Claim 1, **characterized in that** the error signal is indicated optically and/or accoustically.

3. Service brake device according to Claim 1, **characterized in that** the error signal is entered in a readable memory of the electronic control unit.

## Revendications

1. Dispositif (1) de frein de service d'un véhicule, comprenant
a) au moins une soupape (26) de commande de la pression ABS commandée, pour le freinage régulé en glissement, par un appareil (14) électronique de commande ayant au moins une soupape d'entrée et une soupape de sortie et disposée avant un cylindre (30) de frein à actionnement par un fluide comprimé,
b) un conduit (24) pour du fluide comprimé alimentant la soupape (26) de commande de la pression ABS en fluide comprimé, conduit dans lequel peut être appliquée, de manière commandée, une pression réglée par un dispositif (12) de soupape monté avant la soupape (26) de commande de la pression ABS,
c) au moins un capteur (34) de vitesse de rotation d'une roue et/ou au moins un capteur d'accélération pour mesurer l'accélération longitudinale du véhicule, dans lequel
d) le dispositif (12) de soupape commande, dans le conduit (24) pour du fluide comprimé, en fonction d'une commande par l'appareil (14) électronique de commande, une pression déduite d'une pression d'un réservoir (8) de fluide comprimé,
l'appareil (14) électronique de commande étant constitué de manière, dans le cadre d'un cycle d'essai,
e) à mettre la soupape d'entrée et la soupape de sortie de la soupape (26) de commande de la pression ABS en position d'obturation et à commander ensuite le dispositif (12) de soupape pour établir la pression déduite du réservoir (8) de fluide comprimé dans le conduit (24) pour du fluide comprimé et
f) détecter la valeur du glissement de la roue alors présent au moyen du capteur (34) de la vitesse de rotation de la roue et/ou de la valeur de l'accélération ou de la décélération du véhicule alors présente au moyen du capteur d'accélération et à la comparer à des valeurs mémorisées et
g) s'il y a un écart présent suivant des critères déterminés à l'avance des valeurs détectés aux valeurs escomptées, à produire un signal de défaut,
**caractérisé en ce que**
h) l'appareil (14) électronique de commande est constitué en outre pour, dans le cadre de la commande du dispositif de soupape, établir la pression déduite du réservoir de fluide comprimé dans le conduit (24) pour du fluide comprimé, mettre la soupape d'entrée et la soupape de sortie de la soupape (26) de commande de la pression ABS dans la position d'ouverture et
i) détecter la valeur du glissement de la roue alors présent au moyen du capteur (34) de vitesse de rotation de la roue et/ou de la valeur de l'accélération ou de la décélération du véhicule alors présente au moyen du capteur d'accélération et la comparer à des valeurs mémorisées et
j) en présence d'un écart, suivant des critères déterminés à l'avance, des valeurs détectées aux valeurs escomptées, à produire un signal de défaut.

2. Dispositif de frein de service suivant la revendication 1, **caractérisé en ce que** le signal de défaut est indiqué par voie optique et/ou acoustique.

3. Dispositif de frein de service suivant la revendication 1, **caractérisé en ce que** le signal de défaut est porté dans une mémoire déchiffrable de l'appareil électronique de commande.
